# EUROPEAN PATENT APPLICATION

(11) **EP 3 115 871 A1**
(43) Date of publication of application: **11.01.2017**
(21) Application number: 15176172.3
(22) Date of filing: 09.07.2015
(51) Int. Cl.: G06F 3/01, G06F 3/0482, G06F 3/0484, G06F 3/0481

(54) **GRAPHIC USER INTERFACE FOR SELECTION BY GAZE OR OTHER INPUT METHODS**

(71) Applicant: Cogisen SRL, 80121 Napoli (IT)
(72) Inventor: Millar, Damon, London, NW15DP (GB); Mele, Maria Laura, 00183 Roma (IT)
(74) Representative: Leone, Mario

(57) **Abstract**

The invention is a Graphic User Interface suited to devices with 2D or 3D screens that are able to respond to user input. The disclosure comprises a method of selection by gesture, generated by following the motion of a graphic element arranging discrete graphic elements along a circle line, where the selection of one element initializes the appearance of sub-choices, structured in circles of choices to provide a continuous information selection technique; this method can be optimised for a gaze control, where the circle line is arranged into a space corresponding to the user's foveal visual field, and moved in a manner to allow selection of an element by using a smooth pursuit.

## Description

### BACKGROUND

### 1. Field of the Invention

The present disclosure generally relates to control methods to interact with a Graphic User Interface (GUI) content. The invention is a GUI based on a graphic selection method, to choose discrete graphic elements by means of a continuous selection technique. The invention can be also applied to touch, gestures or brain-computer control devices, as well as other traditional primary input devices. Further, a method is disclosed that arranges GUI content in a circular format that expands uniformly, such that every element performs a unique trajectory, and following any element will produce a unique gesture, such it can be quickly selected. Further, a method is disclosed that is optimized for gaze devices that respond to user's gaze control.

### 2. Description of the Background Art

The GUIs for 2D or 3D screens of most electronic devices are generally designed to be controlled by traditional primary input devices such as touch, mice, pens or keyboards. They preferably require actions from users that primarily involve hands to transmit their decision. Although the potential of using gaze as an input for device control has been recognized for a long time, gaze control devices are still infrequently used as a pervasive way for controlling systems, because they are often difficult to use with traditional GUIs without a previous training.

Control necessarily requires that "perception", "attention" and "decision making" processes occur.

Perception is a psychophysiological process given by the integration of selected information. The cognition behind the selection of a target from among several perceptual stimuli involves attentional processes.

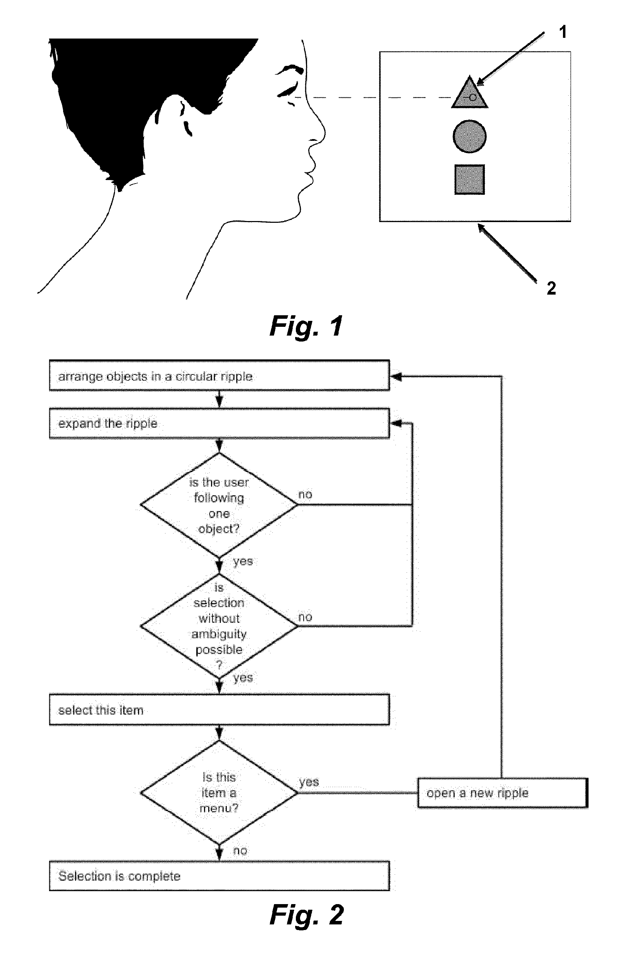

Attention allows humans to keep their perceptual sources focused on selected aspects of a graphic field and to deeply process them. Attention is characterized by its capacity, i.e., how much perceptual resource is available to the perceptual processing system; and its selectivity, i.e., what information the attention system chooses to process. Attention is an evaluative process where people naturally decide which perceptual elements require their attention in their present circumstance to fulfil their goals (e.g. Figure 1).

Attentional processes are closely related to perceptual judgements, which influence the accuracy of the actions needed to select the chosen elements form the information flow. Perceptual attention is both goal-driven (i.e., driven by the subjects' intentions) and stimuli-driven function of the mind (i.e., driven by some attributes and features of perceptual elements). To facilitate perceptual attention, the discrete graphic elements composing a GUI and their mutual relationship may be represented and organized by graphic architectures that are able to help users to quickly perceive, explore and control the user interface according their intentions.

The focus of attention is strictly related to the overall perceptual load of the task. To avoid attentional shifts towards other events that are not related to the task, cognitive psychology researcher (Lavie, N., Perceptual load as a necessary condition for selective attention. Journal of Experimental Psychology: Human Perception and Performance, 21, 451-468, 1995) suggests the overall perceptual load of a task must be maintained at a high enough level. Care must be taken not too to overload the visual channel when is used to both explore and select visual information.

Decision-making is the process that leads us to choose a path of action among a set of available options during a certain period of time (Wickens, C., Lee, J., Liu, Y., Becker., S.E.G., An Introduction to Human Factors Engineering. Upper Saddle River, NJ: Pearson/Prentice Hall, 2004). Although in the everyday life choices are often presented together with information regarding their corresponding outcome, some decisions may involve uncertainty thus requiring taking into account several hypothetical outcomes before choosing a given action, as it happens in large or complex data sets. To simplify decision making, GUIs should ensure: (a) the decision maker is aware of every available option and all of its associated consequences, (b) the decision maker is capable of distinguishing between the details of every available option and (c) the decision maker behaves in a rational manner to maximize utility (Slovic, P., Lichtenstein, S., Fischhoff, B., Decision Making. In Atkinson, R., Herrnstein, R., Lindzey, G., and Luce, R. Steven's Handbook of Experimental Psychology Vol 2. New York, NY:John Wiley and Sons, 1988).

### 3. Gaze control: background and prior art

Our eyes are a fast way to explore and select the information that attracts our attention. Visual stimuli such as graphic elements, text, graphics or images are the main way of communication used in GUIs. A recent study shows that visual exploration is implied in decision processes which guide mouse selection. Therefore, eye movements precede hand movements and influence both speed and accuracy of mouse pointing tasks (Wilmut, K., Wann, J. P., & Brown, J. H.; How active gaze informs the hand in sequential pointing movements. Experimental brain research, 175(4), 654-666, 2006). Directly using gaze movements for control as well as exploration should make the interaction faster than mouse pointing.

The term "gaze control" is commonly used in the literature to refer to systems wherein events such as fixations or gaze gestures are used to directly control a device by deliberately choosing a preferred option or course of action from among a set of alternatives, to affect a control at a moment in time. Compared to mouse control, gaze can be a faster and more intuitive control method because users are already experts at using their eyes to explore and focus on what they are interested in.

In the art of gaze control GUIs, users typically communicate their decisions by means of visual controls, which may appear as buttons, drag-handles, hyperlinks or selectable areas. Gaze is particularly suited for these kinds of visual controls because the screen contents are never occluded during use, as they are in other forms of GUI control such as mouse or touch input. For example, mice require a cursor, which blocks view of part of the control; touch occludes the control (and part of the screen) with the user's finger. Moreover, gaze control is attractive as a directive user input because humans direct their eyes in the process of examining a scene, so no additional behaviour is required to make a selection.

Decision making begins with selection, which is an action that involves decisions based on the perceptually processed information. Discerning selection from attention can be problematic. An issue with using gaze selection is commonly known as the Midas touch problem, i.e., the over-activation of the system under any single eye movement (Jacob, R. J. K., The use of eye movements in human-computer interaction techniques: What you look at is what you get. ACM Transactions on Information Systems, 9(3), 152-169. doi:10.1145/123078.128728, 1991). To avoid Midas touch, many gaze GUIs in the art require the user to perform a distinctive action to indicate selection. Some of the required actions use distinctive eye interaction such as blinking, winking, gaze directional gestures or dwell time. Each of these selection actions takes some time to perform and is an unintuitive action that the user must be taught to use.

Control by selection occurs when the selection of one of a number of choices controls a scene. Control on one discrete graphic element or group of elements at time requires both non-voluntary interaction processes, in which gaze is used only as a means to explore the interface, and voluntary processes, in which eye movements are used as a pointing device to directly interact with the interface. The need to involve non-voluntary and voluntary interaction processes simultaneously reduces the speed of interaction, especially in complex interfaces such as visual interfaces that show multiple elements at the same time. To speed up gaze-based interaction, several techniques to communicate decisions have been proposed in the art using either (1) the fixation-based method or (2) the saccadic gaze gesture-based method (Majaranta, P., Aoki, H., Donegan, M., Hansen, D. W., Hansen, J. P., Hyrskykari, A., & Räihä, K, Gaze Interaction and Applications of Eye Tracking: Advances in Assistive Technologies (pp. 1-382). Hershey, PA: IGI Global, 2012).
(1) The fixation-based interaction method is the most popular method for gaze control and it uses dwell time as input command. Dwell-time refers to a selection mechanism where a user is required to hold their gaze steadily on an element for a period of time, in order to select it. Dwell is cumbersome as a selection method because it can often be slow, unintuitive and inaccurate. Dwell is generally a slow selection method because it introduces a delay before a selection is accepted: A typical dwell time for selection is between half a second and one second. Dwell adds this delay to every selection, so it is unsuitable for high-rate tasks such as typing, or for dynamic scenes where the user is expected to react quickly to on-screen events. Dwell is unintuitive because it requires that people change the way they look at scenes, in order to prevent themselves accidentally selecting an element by gazing at it too long. Users must ensure they constantly move their gaze when investigating a scene. Dwell has problems providing a predictable latency, because eyes perform saccades when examining a stationary scene. The user is generally unaware of performing saccades, so is unable to control them. A user will often perform saccades while attempting to perform dwell on an element. Saccades during dwell cause the UI to pause or reset the dwell-time, resulting in unpredictable delays in selection. Dwell also has problems selecting one from many discrete graphic elements: dwell is only suitable for static scenes, because the gaze must remain stationary on an element in order to perform dwell. In a static scene, elements must be arranged far enough apart that each graphic element can be unambiguously selected by gaze. The need for spatial separation limits how many graphic elements can be shown, and the dwell time limits how many rounds of selection can be made, so dwell is inefficient for selecting one from many discrete graphic elements.
(2) The saccadic gaze gesture-based method use a combination of saccades performed in a sequential time order (Drewes, H., & Schmidt, A., Interacting with the computer using gaze gestures. In C. Baranauskas, P. Palanque, J. Abascal, & S. D. J. Barbosa (Eds.), Human-Computer Interaction (INTERACT '07) (LNCS 4663, pp. 475-488). Berlin, Germany: Springer. doi:10.1007/978-3-540-74800-7_43, 2007). Gaze gestures are short snippets from the user's gaze path that can be also used as command actions. Using sequences of saccades for target selection is a potentially fast method of performing selection (the average duration of a saccade is about 80 ms), and may help avoiding the Midas touch problem in that codified gaze gestures allow the system to differentiate intentional gaze inputs from non-voluntary interaction eye movements. However, the main problem in using gaze gesture-based techniques is to distinguish the saccades that are normally used for browsing the screen from saccades that are instead used to control the screen. Therefore, most of gaze gesture methods use new and uncommon gestures that are often difficult to use in traditional user interfaces. This limitation leads to the need for gaze GUIs to provide fast and easy ways to do/undo gaze selection even when many choices are shown. Moreover, unless the gaze gesture method is often presented as a dwell time-free way to interact, most of the gaze gesture studies use dwell time as well, since it may help to determine which fixations should be taken into account when determining a gaze gesture.

Neither method of selection described above, completely solves both the Midas touch issue and the problem of providing an intuitive control method that does not require prior learning.

### SUMMARY OF THE INVENTION

The overall objective of the invention is to optimise GUIs for fast, accurate control, by means of a continuous selection method based on human information processing models. The invention can be also applied to touch, gestures or brain-computer control devices, as well as other traditional primary input devices.

The above problem is solved by a graphic user interface (GUI) as defined in appended claim 1, wherein one or more first discrete graphic elements on the screen are provided, each representing a choice, the selection of one particular first discrete graphic element producing the appearance of a series of second graphic elements each representing a sub-choice related to said choice, said second graphic elements being arranged around a circle line substantially centred on the selected first discrete graphic element which remain visible, the non-selected first graphic elements remaining visible in background, the selection of one of said second graphic elements producing the starting of an action within a device associated to the GUI, i.e. possibly the initialization of a software or the like, or, for at least a part of said second graphic elements, the appearance of a further series of third graphic elements, each representing a further sub-choice related to the previous choice and sub-choice, said third graphic elements being arranged around a further circle line substantially centred on the selected second graphic element, the selected first graphic element and the previous circle line of said second graphic elements remaining visible in background, and so on for possible additional choices represented by additional graphic elements but related to a previous choice, the additional graphic elements being arranged around a circle substantially centred on a selected graphic elements representing the selected graphic elements of the previous choice, all the previous circle lines of graphic element remaining visible in background.

Circle line is meant to be a closed line encircling a possibly empty central region, resembling to a sort of circle. A possible shape suitable to be used as circle line is a circumference, i.e. a circle as such, a polygon approaching to a circumferential shape, an ellipse etc. In the following, the concept of circle line will be referred as circle.

The specific aim of the disclosure is to allow users of 2D/3D screens to interact with complex information such as large groups of choices that are difficult to handle with traditional GUIs suited for primary input devices such as mice and keyboards.

The disclosure generally relates to Graphic User Interfaces (GUIs) for navigating and controlling 2D or 3D screens of electronic devices. In particular, the disclosure applies an information visualisation technique to a continuous selection method to choose graphic elements from sets. The invention can be also applied to input methods such as gaze, touch, voice, gestures or brain-computer control and traditional primary input devices (e.g., keyboard or mouse).

It is apparent that a GUI, meant to be controlled by gaze, requires a gaze tracking device possibly including at least a camera, a microprocessor to elaborate gaze data and a related software; if controlled through the touch it requires a touch-screen and a related microprocessor; if controlled by voice it requires a microphone and a language recognition software operated through a microprocessor; if controlled by gestures it requires at least a camera and a software designed to recognize gestures through the captured image stream through a microprocessor and so on.

A preferred embodiment of the above GUI includes gaze tracking device possibly including at least a camera, a microprocessor to elaborate gaze data and a related software implemented within the microprocessor. Further embodiments are more detailed with reference to the dependent claims.

In particular, in a specific embodiment of the moving path GUI, the elements are arranged in a circular structure for navigating and selecting one discrete graphic element among several others. The circle of graphic elements expands uniformly, such that every element performs a unique trajectory path, and following any element will produce a unique gesture, allowing it to be unambiguously selected.

If several rounds of selection are performed, subsequent circles of choices may be arranged around the element selected in the previous round, thus forming a sequence of levels.

In another specific embodiment, a circle GUI is optimized for gaze control of electronic devices, provided by a gaze tracking device of the GUI, and uses the position and movement of graphic elements to induce the user's eyes to perform an unambiguous gaze gesture that selects an element.

The GUI may utilize the spatial properties of human visual attention, to determine that a user's eyes are attending the element, rather than just viewing the scene. The moving element may engage the user's eyes into a distinctive mode of movement that is only performed when following a moving target, If the user's eyes engage in this "pursuit" mode of behaviour, they simultaneously provide a distinct indication that the user is engaged in selection rather than scene examination, while also providing a gaze gesture from following the element's path, that uniquely identifies one element from many.

The GUI may use knowledge of the human visual system to maximise the speed of operation. In one method, the GUI may use knowledge of the user's gaze position to position elements with maximum density of selection within a user's foveal visual field, such that they do not need to move their eyes in order to examine all of the elements. In another method that uses knowledge of the human visual system, successive rounds of selections are introduced, sized to fit within the user's foveal region, so that the user need not perform saccades and fixations to examine what is presented.

The proposed GUI is intuitive, because it utilizes gaze actions that people naturally perform with their eyes when selecting one element from a group, does not require a user to suppress actions, and the required actions are self-describing (the user simply looks at the element they prefer), so it can be used without instruction. The GUI provides predictable latency by removing the latency associated with saccades, and by expanding circular formations at a consistent rate, to reach an unambiguous selection at a consistent destination.

### BRIEF DESCRIPTION OF THE DRAWINGS

Further features and advantages of the present invention will become more apparent by the following description, given by reference to the annexed drawings wherein:
- Figure 1 illustrates an attention-based evaluative process where people naturally decide which perceptual elements require their attention in their present circumstance to fulfil their goals, showing an example of evaluative visual selection of an icon among three discrete graphic elements;
- Figure 2 shows a flow chart of a basic embodiment of a round shaped circle line GUI;
- Figure 3 shows the GUI of figure 2, wherein each element on the expanding circle of graphic elements has a unique trajectory;
- Figure 4 shows the GUI of figure 2 wherein subsequent circles of choices may be arranged around the previous selected element;
- Figure 5 shows the GUI of figure 2, wherein the circle is the maximum packing density and all choices are equidistant;
- Figure 6 shows the GUI of figure 2, wherein a single scan path views all choices;
- Figure 7 shows the GUI of figure 2, wherein elements that expand away from a central point all have unique paths from the very first instant;
- Figure 8 shows the GUI of figure 2, wherein elements of a next group are arranged in circular formation around the group's selected element;
- Figure 9 shows the GUI of figure 2, with faded and occluded past rounds of circular formations;
- Figure 10 shows the GUI of figure 2, with a 3-dimensional view of circle line decision history;
- Figure 11 shows the GUI of figure 2, wherein a curved history allows the current selection circle to be oriented for maximum visibility, while still being able to the selection history path;
- Figure 12 shows the GUI of figure 2, wherein a directional and animated circle line makes the history of choices is always available, and after the user makes a selection, an animated circle of graphic elements moves choices into a bifurcation tree;
- Figure 13, shows the GUI of figure 2, wherein, to provide discrete steps between rounds of selection, a circle animation stops when an element has been selected, and a new circle may be paused before animating;
- Figure 14 shows of a further embodiment of a round shaped circle line GUI, wherein the act of looking at a moving graphic element on an expanding circular formation causes the user's eyes to follow an unambiguous path;
- Figure 15 shows the GUI of figure 14 wherein a smooth pursuit eye movement is different to normal scene viewing;
- Figure 16 shows the GUI of figure 14 wherein all elements are presented within a user's foveal visual field on a screen;
- Figure 17 shows the GUI of figure 14 wherein subsequent rounds of selection are placed within the user's foveal visual field;
- Figure 18 shows a flow chart of illustrating the operation of the GUI of figure 14;
- Figure 19 shows the GUI of figure 14 wherein multiple saccades may be needed to investigate the elements in a scene;
- Figure 20 shows the GUI of figure 14 wherein the fovea is illustrated as a small region of an eye's vision span that has sharp vision;
- Figure 21 shows the GUI of figure 14 wherein foveal visual field of view can be projected onto the screen to find the screen area of high acuity. The area on screen of high acuity depends on distance from the screen;
- Figure 22 shows the GUI of figure 14 wherein elements are placed entirely within the present field of view, so no eye movement is required to investigate them;
- Figure 23 shows the GUI of figure 14 wherein, when the graphic elements are not centred around the gaze position, the eye is required to move in order to see them all;
- Figure 24 shows the GUI of figure 14 wherein is illustrated how, as the circle expands, the discrete graphic elements expand outside the foveal visual field, and are no longer all clearly visible without moving the gaze;
- Figure 25 shows the GUI of figure 14 wherein, as the circle expands, the desired graphic element moves outward on the circle line, and the user's eyes will naturally follow it;
- Figure 26 shows the GUI of figure 14 wherein smooth pursuit smoothly and continuously follows a moving element (the triangle in this image), normal saccades occur in jumps with pauses;
- Figure 27 shows the GUI of figure 14 wherein smooth pursuit forms a regular motion following the element's path when speed is lower than 30 degrees/s, that look different to the saccades performed in scene investigation;
- Figure 28 shows the GUI of figure 14 wherein expanding the circle line with varying speed makes prevents anticipatory smooth pursuit;
- Figure 29 shows the GUI of figure 14 wherein some elements are dimmed;
- Figure 30 shows the GUI of figure 14 wherein circle expansion may be delayed or paused until the user attends to it;
- Figure 31 shows the GUI of figure 14 wherein smooth pursuit along a unique path simultaneously evidences that an element is being followed and also the identity of the element being followed;
- Figure 32 shows the GUI of figure 14 wherein, if the user stops pursuing an element, or looks away, the circle begins to contract back to where it started;
- Figure 33 shows the GUI of figure 14 wherein unambiguous selection must wait until the circle has expanded enough that two elements can not both be within the fovea;
- Figure 34 shows the GUI of figure 14 wherein choices on the circle may be arranged to decrease ambiguity by placing them unevenly around the circle line;
- Figure 35 shows the GUI of figure 14 wherein the threshold at which the expansion of the circle is large enough that a selection will made, if an element is pursued over it;
- Figure 36 shows the GUI of figure 14 wherein a confirmation action may be performed for a selected element;
- Figure 37 shows the GUI of figure 14 wherein, if elements that represent actions and groups are not obviously differentiated, navigation may be fraught because exploring some choices will cause an action;
- Figure 38 shows the GUI of figure 14 wherein, if action elements are visually distinct, then selection of an action element is also confirmation that action;
- Figure 39 shows the GUI of figure 14 wherein, if the selected choice represents a group, then a secondary circle line is created;
- Figure 40 shows the GUI of figure 14 wherein the foveal visual field area may not be centred on the selected element, so the next circle line may not be entirely visible within the foveal area;
- Figure 41 shows the GUI of figure 14 wherein the secondary circle line may be centred on the gaze position, rather than the selected element, to ensure that all elements of the child circle line are visible without a saccade; and
- Figure 42 shows a flowchart of the proposed gaze circle line select process illustrating the GUI of figure 14.

### DESCRIPTION OF THE PREFERRED EMBODIMENTS

In Figure 1 an attention-based evaluative process is illustrated, where a user naturally decide which perceptual elements require their attention in his/her present circumstance to fulfil his/her goals. In this decision, an evaluative visual selection is made of an icon 1 among a number of discrete graphic elements.

According to a first basic embodiment of the present invention apt to be used on a 2D or 3D screen 2 of a device, one or more first discrete graphic elements 3 are provided on the screen, each representing a choice, the selection of one particular first discrete graphic element producing the appearance of a series of second or further graphic elements 3' each representing a sub-choice related to said choice.

In a preferred embodiment of the present GUI, it comprises or it is associated to a gaze tracking device to detect the gaze path of a GUI user's gaze on the screen of the GUI, the gaze tracking device possibly including at least a camera, i.e. a video camera producing a streaming of images, a microprocessor to elaborate a user's gaze data from said image streaming and a related software implemented within the microprocessor (not shown). In principle, the gaze tracking device can identify not only the gaze path and/or position thereof on the screen surface, but also all the involuntary eye movements, namely the gaze saccadic gestures a gaze fixation, so as to understand when a visual discrete element on the screen is engaged, i.e. selected, through the user's gaze.

The purpose of this tracking device is to catch the user eye movements on the screen, to understand when a discrete graphic element thereon is under the user's gaze, i.e. it is selected through the user's gaze tracked by the tracking device.

Many gaze tracking devices are known in the art and the present invention is not specifically linked to one of them.

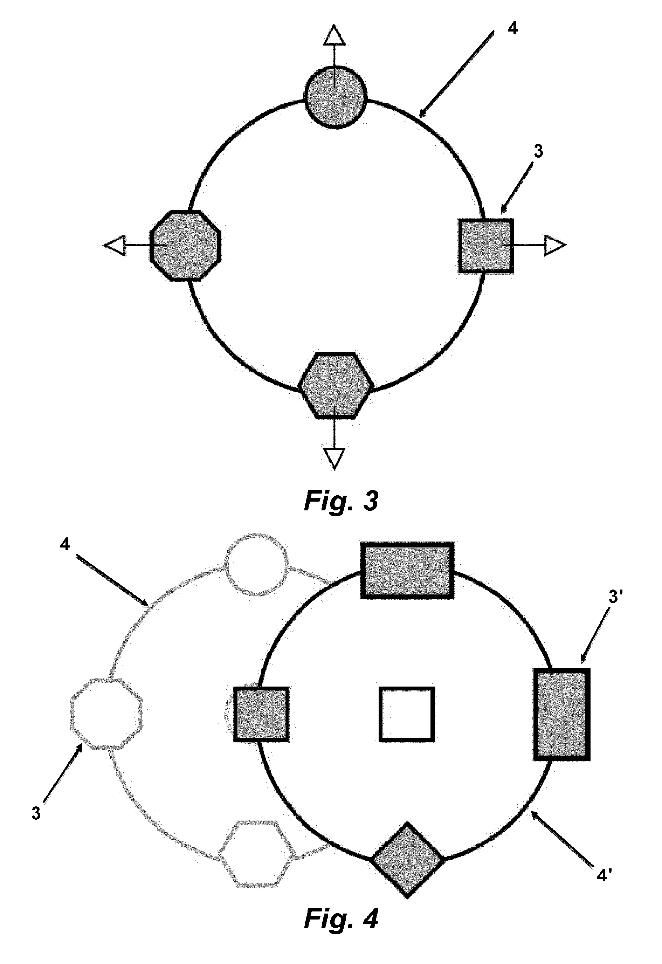

In this embodiment, the elements related to a choice, or possibly to a sub-choice started from an isolated but then expanded icon 1 as well, are arranged around a circle line made of the discrete graphic elements 3 themselves, i.e. according to a circular structure 4 for navigating and selecting one discrete graphic element among several others (Figure 3). It is clear that the starting choice can be a single and isolated icon, a series of icon placed on the screen or a series of graphic elements arranged according to a circle line as above described, all these starting choices falling within the scope of the present invention.

The circle of graphic elements can be kept still or it can be moved, e.g. it can be uniformly expanded like a circular ripple in a liquid, such that every element follows a unique trajectory path, and selecting any element will produce a user's unique gesture, in particular allowing it to be unambiguously selected by said gaze tracking device, i.e. because the user follows by gaze a certain discrete graphic element instead of another, and even by another tracking system by touch or gesture (se above).

If several rounds of selection are performed, subsequent circles 4' of choices may be arranged around the element selected in the previous round, thus forming a sequence of levels (Figure 4). The graphic elements belonging to a circle are substantially equispaced around the circle.

If the circle line 4 is kept still, the user can be trained to stare at the central region of the circle line and then to move the gaze towards the graphic element to be selected: the identification of a voluntary gaze movement along a path could be easier and safer than the identification of the act of staring at the graphic element, wherein the gaze detection is anyway affected by saccades. Therefore, the use of many levels of circle lines 4 each with a number of graphic elements to be selected is advantageous for the uniform distribution of selectable objects on the screen around an empty space, leading the gaze along fast identifiable paths.

Otherwise, the circle lines involved in this decisional process can be dynamic, i.e. the circle lines and/or the associated graphic elements can be moved to ease the selection thereof, as it will be detailed hereinafter.

This process, involving the opening of subsequent circular ripples or circles made of elements 3' to be selected is depicted in the flow chart of Figure 2, i.e. when the circle of elements is expanded thus moving all the elements thereof outwardly. If the user follows one of the element and when this selection is unambiguous, the selection is confirmed and, if this element correspond to a menu, i.e. to another set of elements, a new circle made of these elements is opened and possibly expanded like a ripple expands in a liquid.

In the present embodiment, a continuous selection method is used, that organizes large data sets into formations for fast selection. Selection using an element-following technique can be slow if the user must search a large area to find the choice, if the user must move a long distance to begin following the choice, or if a very long gesture is required to make the element's path unique. Additionally selection may be biased if the index of difficulty for selecting the choices differs (e.g. some elements are closer than others). To overcome these difficulties, this embodiment proposes arranging these movement-selectable choices in a circular formation. The choices may be visually linked with a circle 4 (Figure 3), possible an expanding circle.

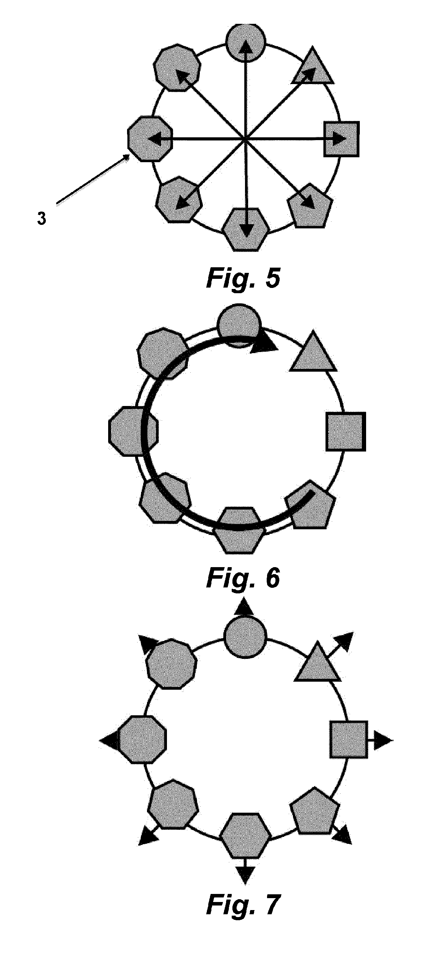

The ripple-like circular formation reduces the movement distance to the elements to the minimum possible average distance by arranging them in a circle. The distribution of the circles of graphic elements 3 also removes bias by ensuring that every element is an identical distance away (Figure 5). The circular formation reduces the visual search area required to find the choice by arranging the elements into a single well-defined scan path (Figure 6).

The diameter of each discrete graphic element should preferably match at least 1,5° of the central part of the visual field (*element size*=*radians*radius of the visual field*)*.* A minimum delay of 300 ms for each element before animation starts assures that the user understands the semantic or categorial meaning of choices.

Elements in the circular formation move outwards uniformly from the centre in circular formation, thereby ensuring that the path of every element is unique. Because every path is unique from the very first moment, a minimal path is needed to uniquely identify which element a gaze or gesture is following (Figure 7). The constant speed of each discrete graphic element should not be higher than 40°/s and the duration should be equals or more than 40 ms, which is the minimum time required to the human eye to catch a moving target by staring at it.

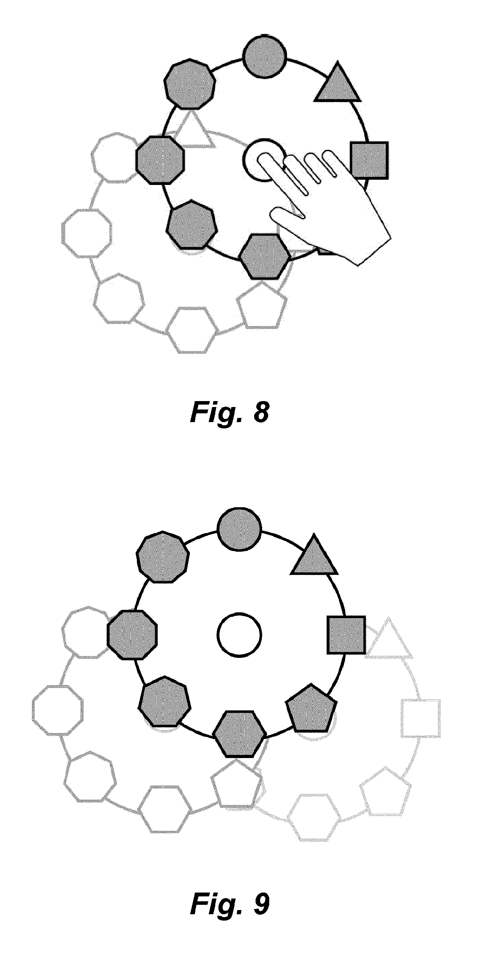

If multiple rounds of selection are required, a circular round formation provides faster navigation through subgroups, by arranging the elements of the group in circle lines surrounding the selected element (Figure 8). Therefore, each subsequent circle corresponds to a previous selected graphic element, thus forming a sequence of levels (Figure 9) where the higher level, i.e. the last one selected, is highlighted with respect to the others.

For each level, the selection of any graphic element in background may produce the disappearance or the fading of all the circles of the levels which had been previously opened; and the selection of the first graphic element originating all the visible circles of graphic elements producing the disappearance of all the circles of graphic elements; and the selection of another of the first graphic elements may produce the disappearance or the fading of all the circles of graphic elements and the appearance of another circle of second graphic elements related to the currently selected first graphic element.

On the other way round, the selection of any graphic element in background also produce the appearance of another circle of graphic elements corresponding to the selected graphic element.

The circles and/or the graphic elements in background can undergo a modification of their shape, colour, position, size on said screen, or a combination thereof. Fading is only one of the possible transformations.

Each subsequent circle, corresponding to a previous selected graphic element, form a sequence of levels, and the circle and the graphic elements of each level in background can assume a peculiar modification of their shape, colour, position, size on said screen, or a combination thereof representing their level.

When a large number of groups have been navigated through, the path back may become very long and difficult to recall. To aid navigation, a structure may be provided. Many studies from neuroscience highlight a strong relationship between spatial location and Working Memory (i.e. a system of active short term memory which is able to hold in mind multiple parts of transitory information for the time needed to process it). Working Memory only has a memory span of seven stimuli plus or minus two. However, when information is presented in an organised way, human long-term memory (information that is held in mind for longer than a minute) is capable of remembering scenes with hundreds of thousands of details. Groups are likely to possess more than ten elements, so the method of presentation needs to be optimised for long-term memory. Arranging elements them into a scene makes them more easily memorable, allowing them to be navigable by long-term memory, rather than by re-examining the elements at each historical round. Circle selection is suited to long-term memory because past choices stay in the same relative positions, which makes it possible to use memory to navigate the history of choices - users need to re-examine the elements of a choice (e.g., banana, apple or pear), rather they can remember the location that a choice was made (e.g., "The fruit choice was made here").

To provide a cohesive global navigation orientation, the round shaped circle line GUI may use depth (i.e. z axis) as the spatial indication of path. Arranging a new round shaped circle line on top of previous circles and around the selected element, creates a navigable scene in which the history of each round of choices overlays the previous rounds. Circles from previous rounds will be obstructed by newer elements, so the depth dimension provides visually sensible ways to prevent past and current circles overlapping each other confusingly. The perception of progress in the z direction may be enhanced by fading older circles. This fade may increase for circles that are more rounds away from the currently round of graphic elements. Fading graphic elements from previous rounds allows the user increased visibility when making new choices, as older rounds of choices are less visible (Figure 9).

To aid navigation, the circle line history may be depicted in three dimensions. The literature on human information processing shows that 3D interfaces might enhance efficiency in GUIs navigation and provide error prevention and history keeping especially in information exploration and visualization tasks.

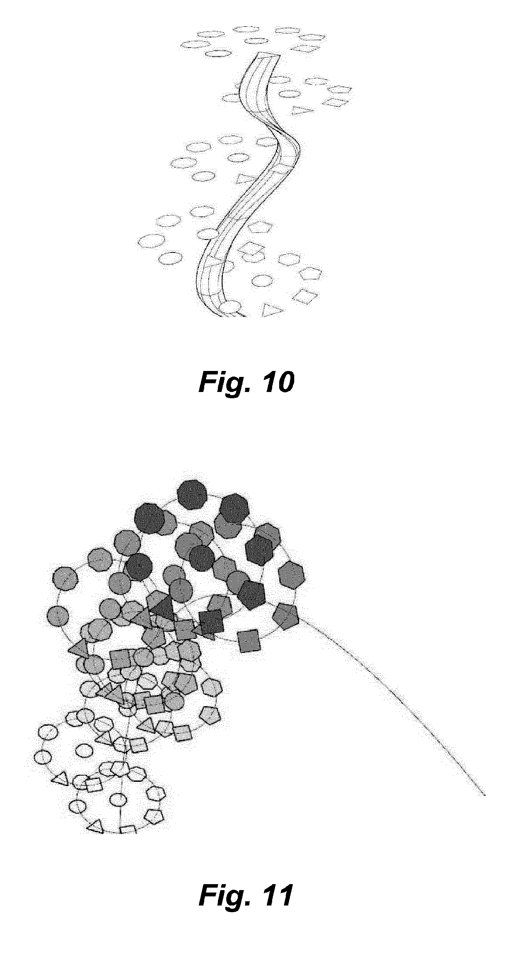

In this embodiment, if one of the dimensions is used for time, while the other two dimensions are used to display the circle of choices, global orientation is preserved for the user looking back in time, who will perceive past decisions as a path backward through a decision cloud (Figure 10). Orientation of this third dimension may be chosen to prevent past and current circles overlapping each other in vision. In a 3D depiction, choices from previous rounds may naturally be de-emphasised by using visual properties that make real-world distant elements less discernable, such as perspective, focus, haze and lighting. These effects mimic the natural effect of distance that cause elements to appear further away by appearing to be smaller, out of focus, less well illuminated, and obstructed by newer elements that are closer.

One difficulty with using a 3D depiction of selection history, is that the user must compromise between the visibility of the current selection round, and the past selection history. In a typical 2D GUI, the z-axis is perpendicular to the viewing plane, so it is not visible. In order to view the z-axis selection history, the perspective must be altered so that it is no longer perpendicular to the viewing plane. But moving the viewpoint reduces the visibility of the current selection round, so the user is forced to choose a viewpoint that compromises between the visibility of the current and past rounds of selection.

One proposed way to making historical choices visible without compromising the visibility of the current round, is to arrange the history axis in a generally curved or angled shape, so that the current choices are perpendicular to the viewing plane, but historical choices are seen at an angle, where the selection history can be easily observed. A further advantage of this depiction method is that very old elements eventually curve out of view, over a horizon (Figure 11).

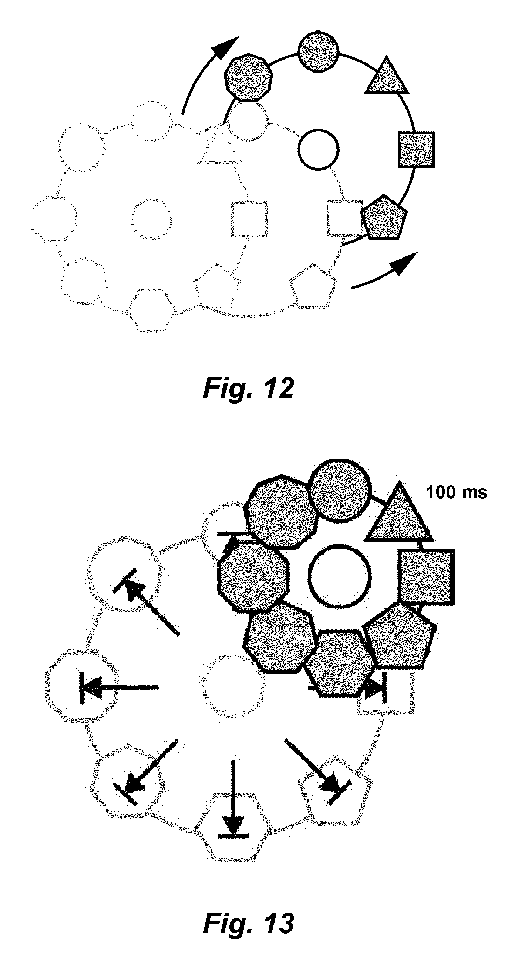

In one variation, instead of using depth to display selection history, a partial circle may be displayed. The partial circle arranges choices in a semicircle, so it does not overlap other previous circles. This solution provides a constant spatial landmark to users because the previously browsed choices are shown in the same position. Therefore, the user does not need to employ reorientation strategies to navigate the history of choices. The partial circle may be useful in situations where the device does do not support the effects required to previous selection rounds as depth (Figure 12).

The animation of elements in the circle may be limited to suit the human ability to process and remember rounds of selection. Users often conceive animated tasks as sequences of discrete steps , and motion inhibits the discretisation process that is necessary to create a mental path of the steps composing the history of choices. To provide clearly discrete steps, the circle selection method freezes the motion of elements in the circle line once a selection has been made, and begins a totally new circle. Animated elements also lack the ability to evoke eye movements that may influence accuracy and speed, known as leading saccades, i.e. anticipatory saccades of any amplitude over 1°, which occur when elements appear at a predictable location. To ensure that leading saccades can be used with circle selection, the elements in a circle appear in a consistent place within the circle, whenever that circle is activated. Additionally, when a circle is created, the elements in the circular formation may pause for 100 ms, to allow time for saccades to discover the elements (Figure 13).

According to a further embodiment of the present invention, knowledge of the human visual system is used to maximise the speed of operation of a gaze controlled circle selection GUI.

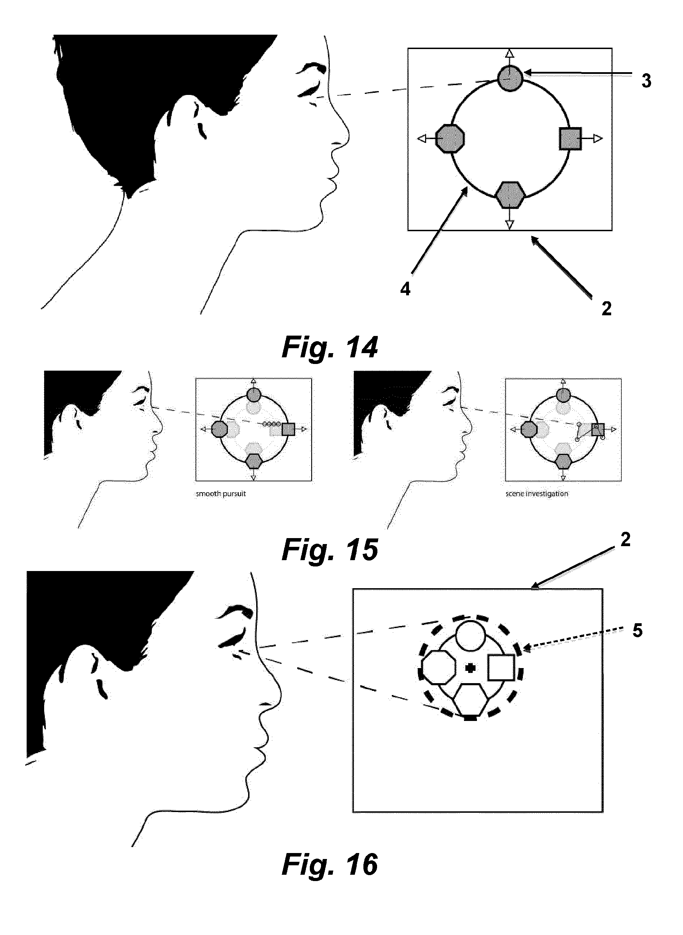

In particular, another specific embodiment of the circle GUI is optimized for gaze control of electronic devices, i.e. electronic devices comprising a gaze tracking device as set forth above, and uses the position and movement of graphic elements to induce the user's eyes to perform an unambiguous gaze gesture, detectable by said gaze tracking device, that selects an element 3 (Figure 14) on a screen 2. In this connection, the GUI comprises a gaze tracking device to detect the gaze path of a GUI user's gaze on the screen of the GUI.

This GUI may utilize the spatial properties of human visual attention, to determine that a user's eyes are attending the element, rather than just viewing the scene. The moving element may engage the user's eyes into a distinctive mode of movement that is only performed when following a moving target, If the user's eyes engage in this "pursuit" mode of behaviour, they simultaneously provide a distinct indication that the user is engaged in selection rather than scene examination, while also providing a gaze gesture from following the element's path, that uniquely identifies one element from many (Figure 15).

The GUI may use knowledge of the human visual system to maximise the speed of operation. In one method, the GUI uses knowledge of the user's gaze position on the undergoing gaze path to place elements with maximum density of selection within a user's foveal visual field 5 projected on the screen 2, such that they do not need to move their eyes in order to examine all of the elements (Figure 16).

To perform this action, the GUI comprises means for detecting the distance between the GUI screen and the user's eyes, and means for determining the user's visual foveal field based on said distance on the screen. Such means can be implemented in the GUI device through the microprocessor thereof and through an appropriate software within the microprocessor. Such means can therefore use the camera of the GUI device, i.e. the camera used by the gaze tracking device as set forth above. Accordingly, the gaze tracking device can perform also the functions of detecting the distance between the GUI screen and the user's eyes and determining the user's visual foveal field size on the screen.

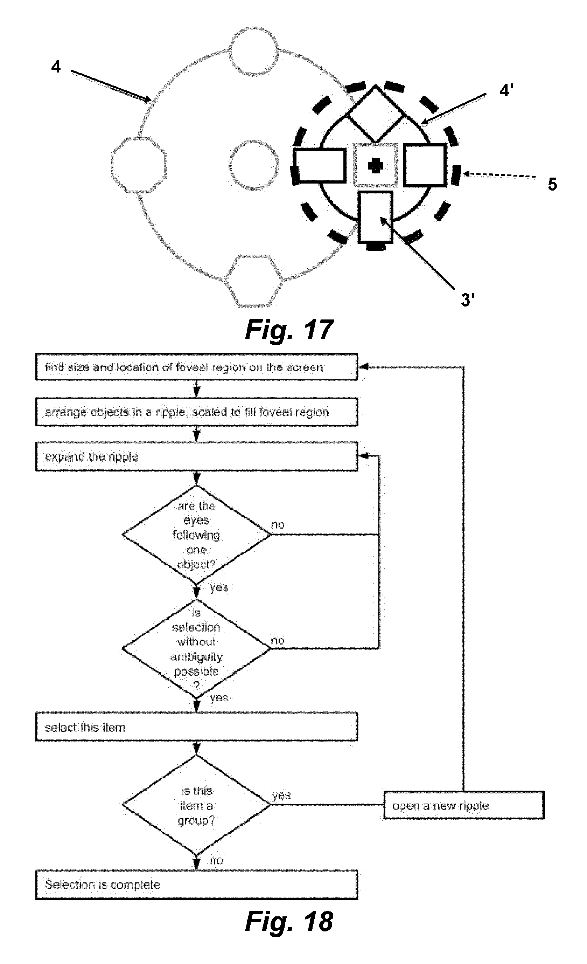

In another method that uses knowledge of the human visual system, successive rounds of circle lines 4' are introduced, sized to fall within the user's foveal region 5, so that the user need not perform saccades and fixations to examine what is presented (Figure 17).

The proposed GUI is intuitive, because it utilizes gaze actions that people naturally perform with their eyes when selecting one element from a group, does not require a user to suppress actions, and the required actions are self-describing (the user simply looks at the element they prefer), so it can be used without instruction. The GUI provides predictable latency by removing the latency associated with saccades, and by expanding circular formations at a consistent rate, to reach an unambiguous selection at a consistent destination.

The selection process may be summarised in a flowchart, as shown in Figure 18. In this process, first the size of user's foveal region on the GUI device screen is calculated, and then such a region is identified on the screen starting from the gaze tracking. The circle of elements is then placed inside such region or anyway the size of the circle is adapted to that of the region.

Then, the circle is operated as a ripple, i.e. expanded, thus moving all the elements thereof outwardly. If the user follows one of the element and when this selection is unambiguous, the selection is confirmed and, if this element correspond to a menu, i.e. to another set of elements, a new circle made of these elements is opened within a region contained in the use's foveal region on the screen, and possibly expanded like a ripple expands in a liquid.

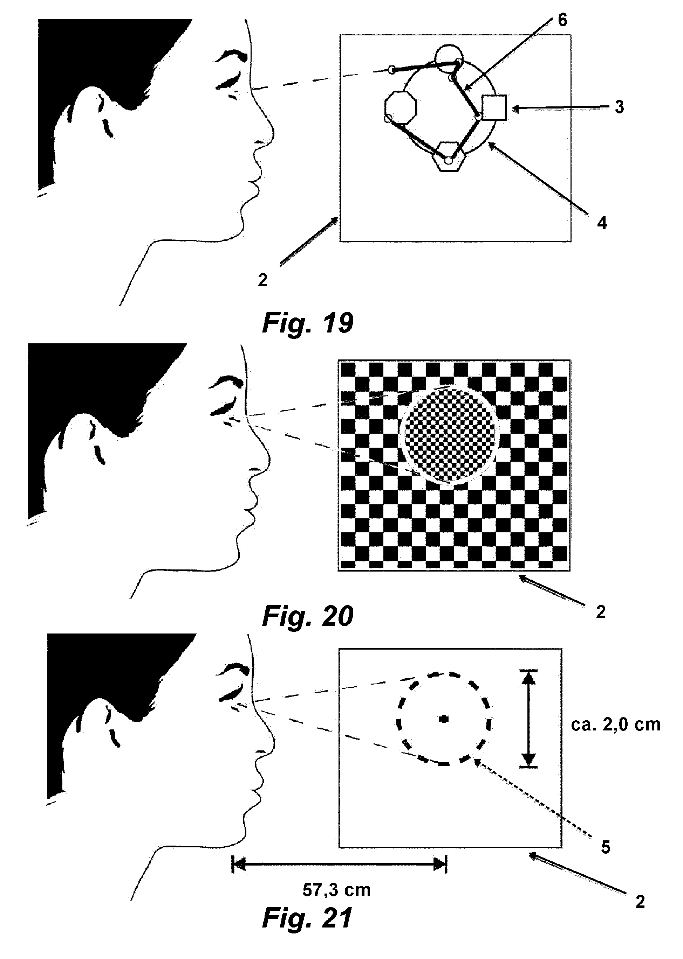

When a typical scene is presented to a user, a period of scene discovery ensues in which the user's eyes perform saccades 6, shown in the drawing like rectilinear gaze paths, in which they move their eyes to focus on and identify new elements in the scene. Each saccade takes 100- 300 ms (Figure 19). Saccades 6 are necessary to identify elements because only a small portion of the human eye is capable of high quality central vision span. Vision span is the angular span (vertically and horizontally), within which the human eye has sharp vision. The fovea is a small circular region of the eye that matches the extent of the vision span and depends on the user's range from the screen (Figure 20).

By measuring the user's distance from the screen (e.g. by the apparent distance between the user's eyes), the size of the foveal visual field on the screen can be calculated, that corresponds to the foveal visual field at that distance.

Typically, at 57,3 cm from the eyes, 1° visual degree covers a circle of 1 cm of diameter. The foveal visual field covers approximately the central 2° degrees of the entire visual field, so when sitting at a distance of 57,3 cm, the foveal visual field will be 2 cm diameter (Figure 21).

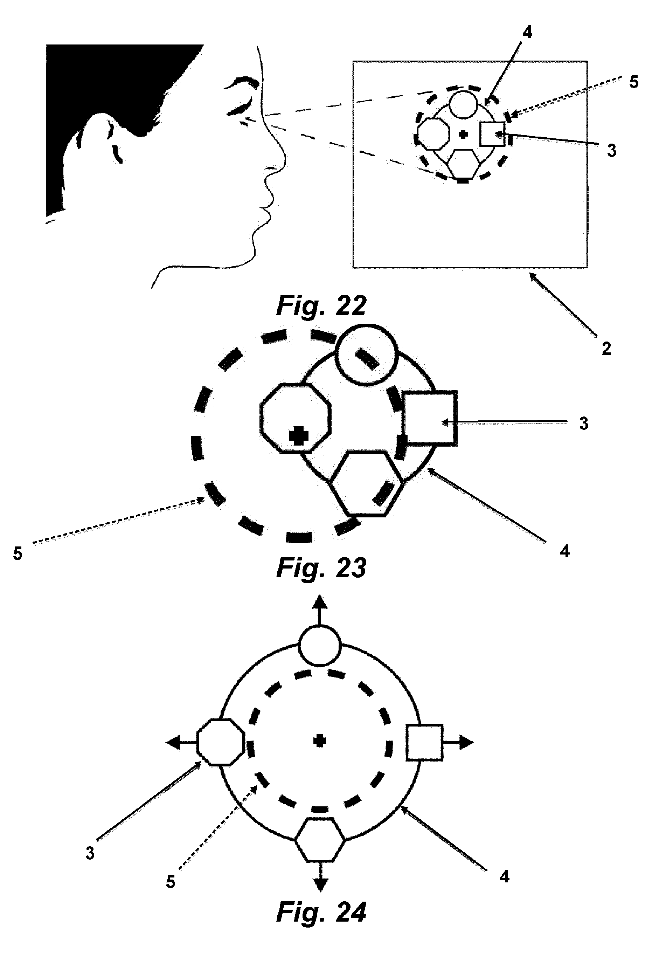

To prevent the user needing to perform saccades for investigating the elements in a circle line, it is proposed that the graphic elements of a circle line may all be scaled to be initially displayed within a region that which is calculated to fit within the foveal visual field of a viewer. The intention is that the graphic elements within the foveal visual field may all be perceived in one fixation, without requiring a saccade. (Figure 22). The scaling factor for the circle is: maximum size that all elements on the circle sit completely within foveal visual field. The circle may be scaled to slightly less than 100% of the foveal visual field to account for visual acuity tailed off at the edges of the fovea. Further, the group may be centred on the user's current gaze position, so that a saccade is not required to begin fixating on the group (Figure 23).

When the elements are first presented, there may be a delay to enable the user to recognise the elements while they are all within the foveal visual field. Eye movements are guided both by bottom-up factors like visual salience and top-down factors like expected value. When a new scene is presented, these factors may cause gaze to move in ways that may not be indicative of preference, such as in visual scanning behaviour. If element motion were to start as soon as the visual stimulus appears, pursuit (i) is initially guided by salience information; (ii) 230-270 ms after target motion onset, pursuit direction begins to be influenced by value; and (iii) "only after 300-400 ms, depending on the experiment, smooth pursuit puts a larger weight on value than salience". Therefore, a delay of at least 250 ms before movement may be used by the circle GUI to allow the cognitive system to make a preliminary evaluation of content. The first 100 ms of delay may be used to calculate the centre of the perceptual visual field (i.e., the minimum fixation duration in free-viewing tasks. An additional delay of 150 ms is then added to achieve the 250 ms fixation threshold.

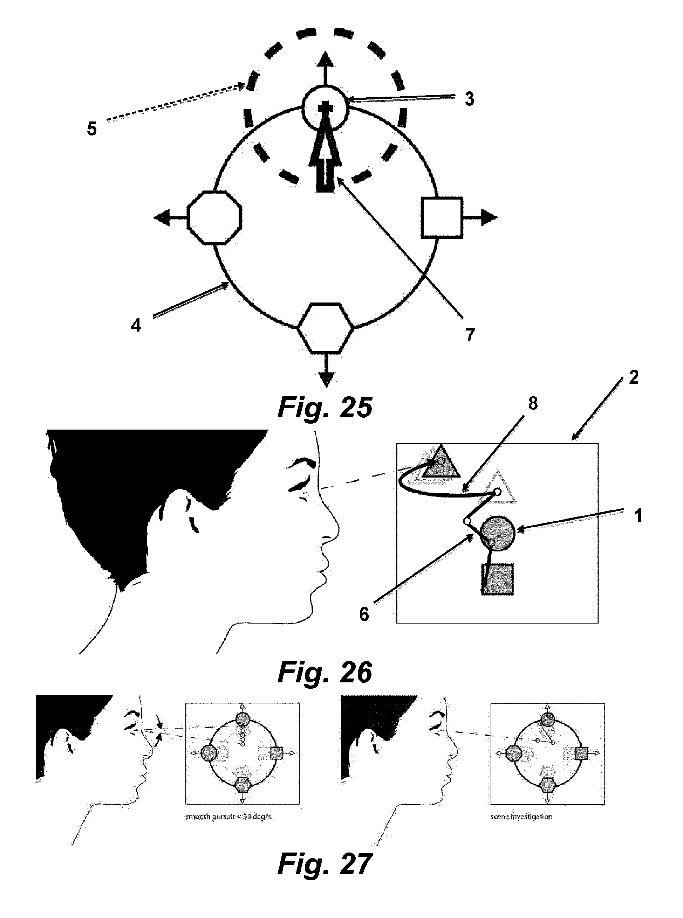

Once the delay is completed, elements move outward simultaneously in a circular formation from the original location. As the circle expands away from the origin location like a sort of ripple, the discrete graphic elements 3 in the circle 4 are no longer all visible within the user's foveal visual field 5. If the user wishes to continue to attend to one or more elements, the user is forced to make a choice about which element 3 to track (Figure 24). Research shows that when an oculomotor choice is to be made between two equally salient motion signals, the successful initiation of pursuit eye movements depends on the presence of an attentional bias towards the target. If the user wishes to continue attending to a choice, they will be forced to move their eyes to track the element along its specific path 7. This movement is essential, because when multiple discrete graphic elements are within the foveal visual field, it is not possible to discern which choice is under gaze, because any element within the foveal visual field is visible (Figure 25).

The moving element may engage the user's eyes into a distinctive mode of gaze movement that is only performed when pursuing a moving element. This mode of vision called "Smooth Pursuit". When examining a scene or element, typical human vision moves in fast jumps called saccades with pauses between, i.e. the gaze saccadic gestures detectable by said gaze tracking device. Smooth pursuit is different from saccades in that a smooth pursuit 8, shown as a curved line in the drawings,necessarily requires something to follow (Figure 26); also the smooth pursuit is detectable and distinguishable by said gaze tracking device.

The speed at which choices in a circle line move away from the original location may be calculated to induce smooth pursuit. Smooth pursuit is much slower than saccades and it usually peaks at 25- 40°/s. Smooth pursuit occurs at speeds greater than 0,5 degrees per second and generally involves less than 100 degrees per second of a viewer's eye. The speed of the moving target should be preferably lower than 30 degrees per second (Figure 27) because, when elements move with velocities greater than this, eyes tend to perform catch-up saccades (i.e., when the gaze position lags behind the target it follows), back-up saccades (saccades in the direction opposite target motion which reposition the eyes on the target when eye position was ahead of the target) and leading saccades.

When deciding whether an element is being followed with a smooth pursuit, the system may compensate for the detailed manner in which smooth pursuit occurs. Smooth pursuit initiation consists of two phases: (1) "open loop pursuit", a ballistic acceleration towards the estimated target direction in the earliest 100 ms of smooth pursuit. (2) "closed-loop pursuit", responds to the error between element and gaze position, starts < 300 ms after stimulus onset.

During both phases of smooth pursuit, there is error between element and gaze position, known as "retinal slip", owing to motion of the target away from the gaze point. Retinal slip is smaller in the second phase, because it is continuously and much more accurately compensated for, so a different set of criteria for determining whether smooth pursuit is being performed may be applied during the second phase.

Smooth pursuit exhibits an "offset latency" from time the target moves until the eye follows it. This offset may be accommodated by delaying the element position by a suitable time before comparing it to eye position.

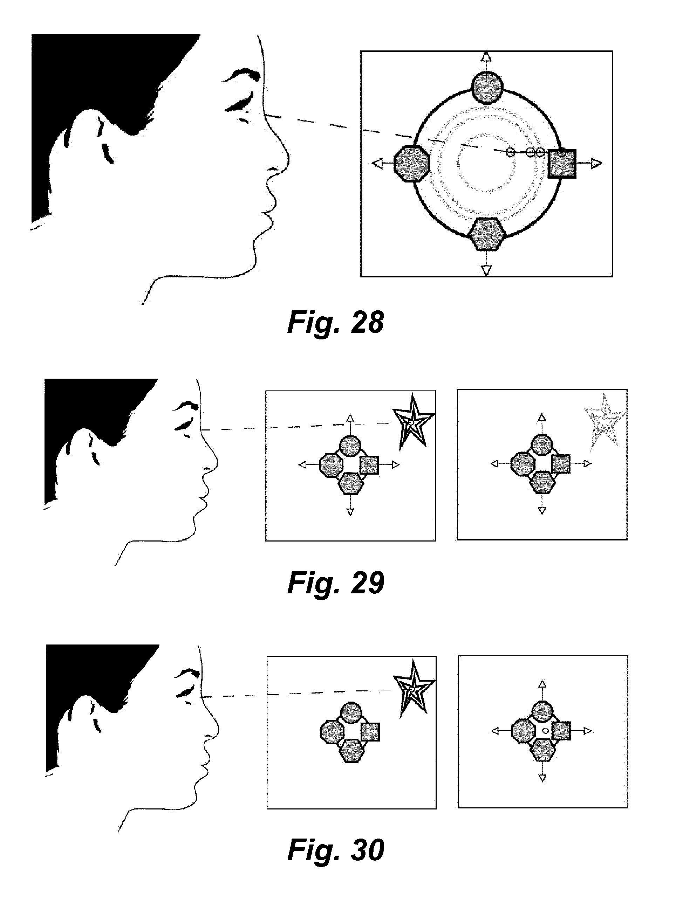

Anticipatory smooth pursuit can occur in smooth pursuit if the target motion is predictable. In order to avoid anticipatory smooth pursuit, the circle may expand at a varying speed between 10 and 30 degrees of visual angle/s, to create an unpredictable target motion (Figure 28).

Eye research shows that when the priority of a perceptual task is equal or greater than priority of a pursuit task, pursuit is often delayed. One possible method is to avoid presenting distractions around the moment when the circle begins to expand. Another proposed method is to reduce the visual saliency of other elements on the screen, so the circle is always the most salient task (Figure 29). Another solution is to begin expanding the circle only when the user's gaze enters the area of the circle of graphic elements. This allows the user to attend to any high-priority distractions without the user missing out on the start period in which all the elements fit within one foveal visual field (Figure 30).

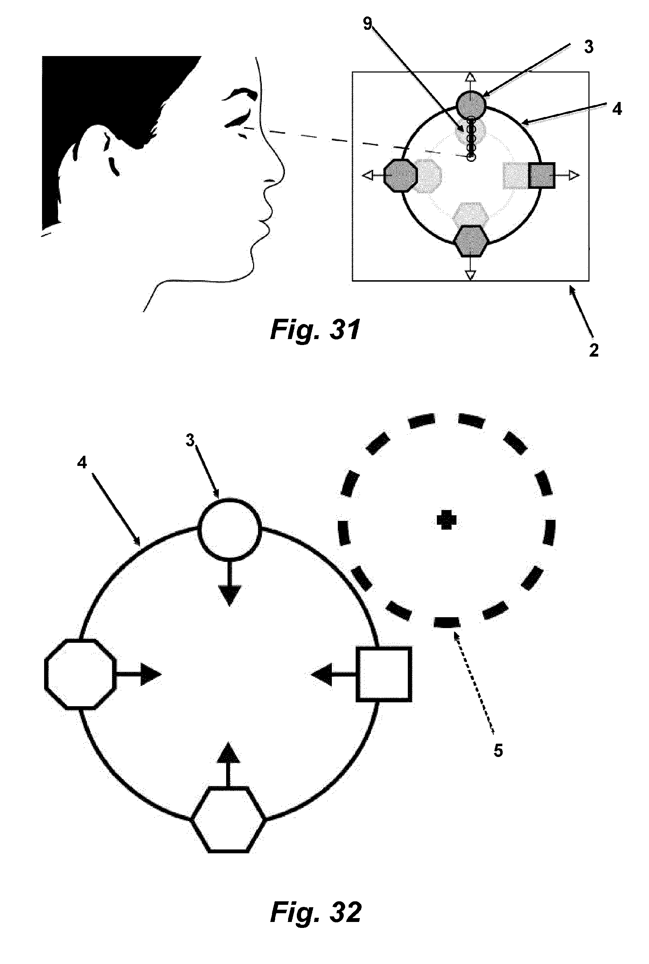

If smooth pursuit is seen along a path that mimics an on-screen element animation, and every element has a unique path, then the user is simultaneously providing (a) a distinct indication of selection rather than scene examination and (b) a gaze gesture 9 that uniquely identifies one element 3 from many (Figure 31).

Selection may be a continuous process: The circle line gradually becomes larger as the user looks at it. If the user continues to gaze at a choice within the circle, the circle continues to expand. If the user stops pursuing a choice, or looks away, the circle 4 of graphic elements 3 begins to gradually contract back to where it started. This happens naturally when the user is not interested in any of the choices, so a user simply gazes at what interests them in order to navigate, and there is no penalty for investigating the wrong choice (Figure 32).

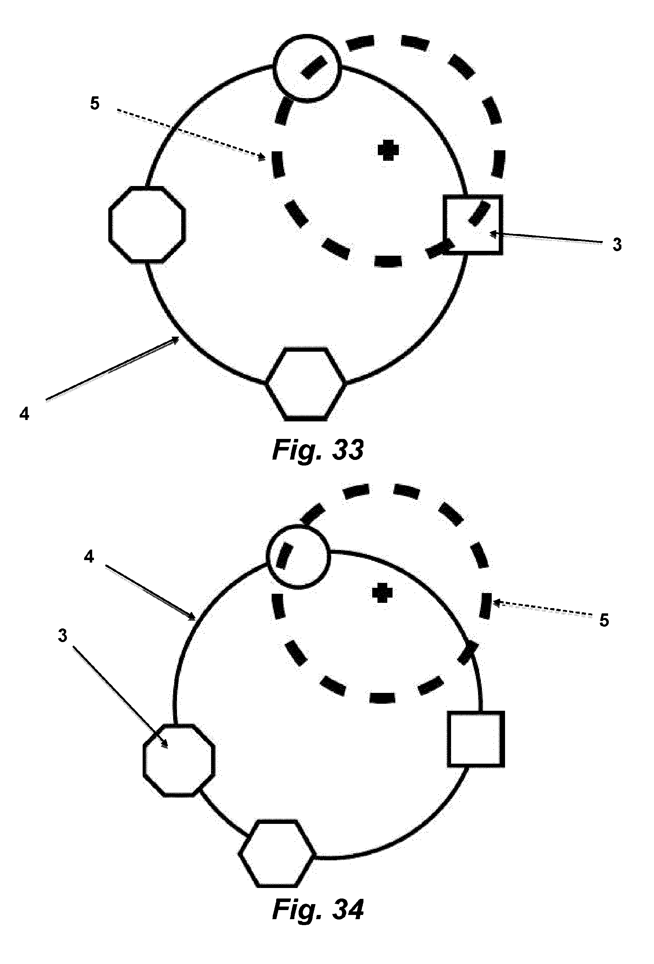

Once the graphic elements 3 have expanded completely outside the foveal visual field 5, they become sufficiently distant from each other that a choice can unambiguously be said to be the one being smoothly pursued. To be totally unambiguous, the circle line must have expanded enough that elements are more than one foveal visual field distance apart (Figure 33). Optionally, the elements 3 in a circle line 4 may be displayed unevenly distributed around the circle, to allow an unambiguous selection to be made sooner. The uneven distribution may be performed statically, so that from the beginning the most likely elements have the greatest separation, or dynamically, such that elements that are close to the current point of regard are moved to increase their separation (Figure 34).

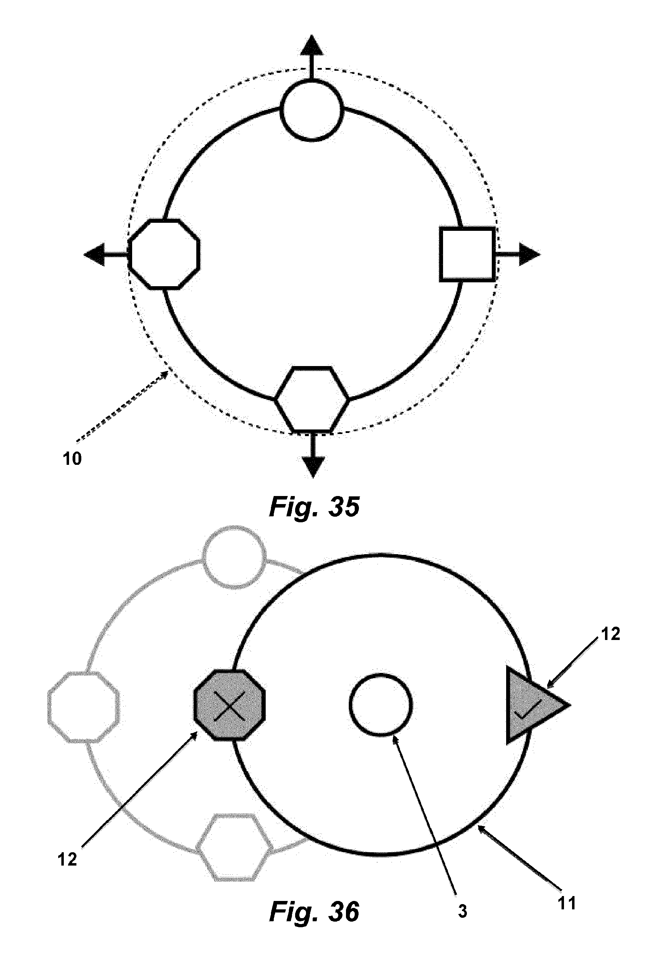

At the point at which unambiguous selection is possible, the pursued element may declared as the selected choice. This point of selection may be visually indicated with a graphic encircling 10, to provide a logical indication to the user that a choice will be selected if it is pursued over the threshold (Figure 35). The selection of a pursued element may be delayed when there are irregularities, i.e., if the user has changed elements to pursue more than one choice during the expansion, or if the user has averted his/her gaze, so the choice currently pursued has not been pursued for sufficient time to be certain it was selected. these delays may be indicated by shrinking the circle when they occur, or by enlarging the selection threshold.

Once a choice has been selected, it may be treated according to whether it is a selectable discrete graphic element, or it represents a group of elements. If the selected element is a discrete choice, then an action is performed that corresponds to the choice. To prevent accidental selection of an action, a confirmation procedure may be launched to confirm the selection (e.g., a second circle 11 with confirm/deny options 12) (Figure 36).

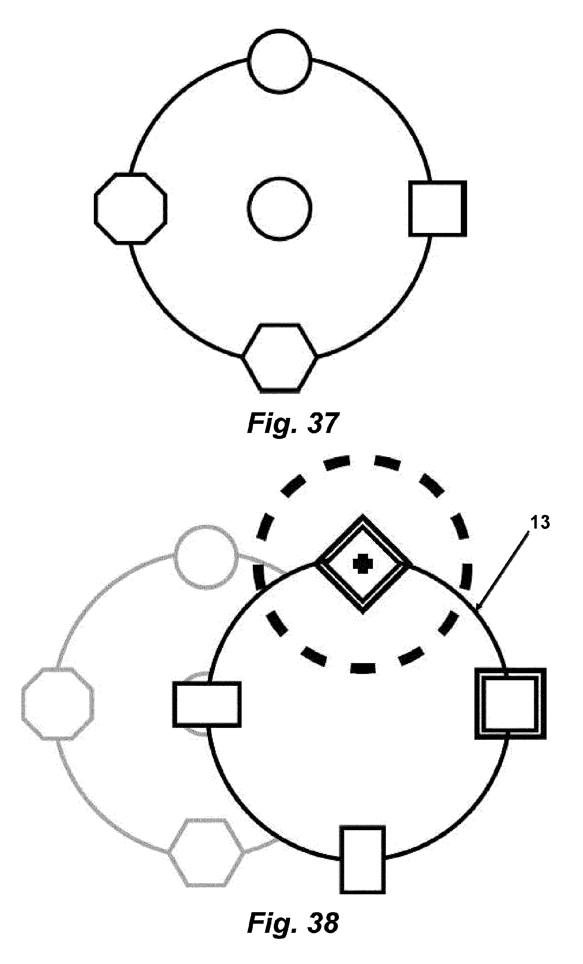

If elements that represent selections and groups are not visually distinct, then the user may not know whether selecting an element will cause navigation or an action to occur. That uncertainty may cause the user may become wary when navigating, because they may inadvertently select an action when they were merely investigating the choices on offer (Figure 37).

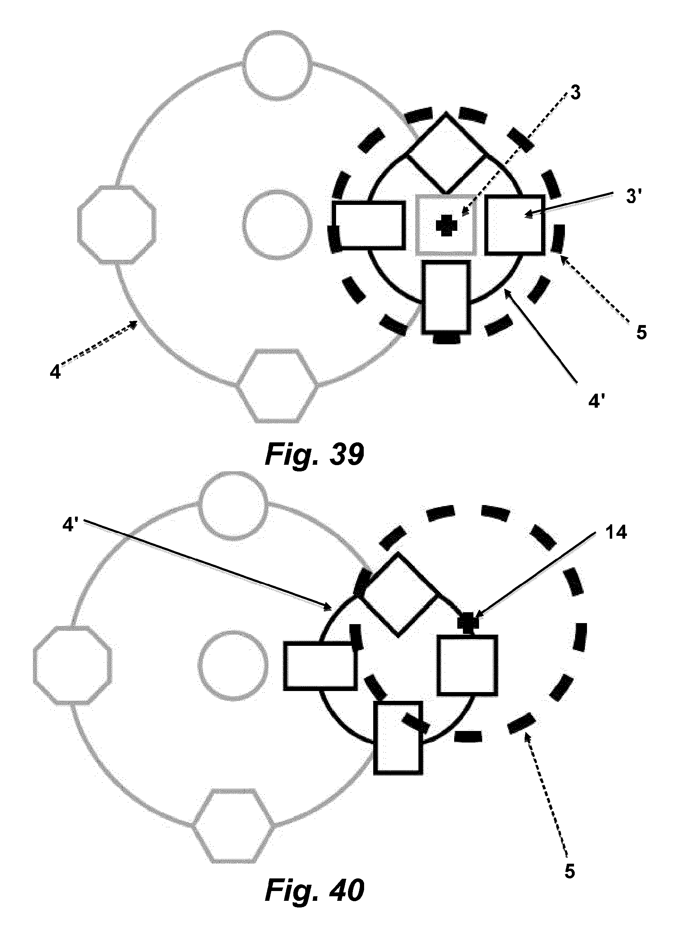

Elements that represent a group may be made visually distinct, e.g. possess a visible frame 13, so that a user needs not to select an element before discovering whether it is a group with child elements. Visually distinct elements may remove the need for a further confirmation round, to attain confidence that user intends to select an element. A user is able to perform selection and confirmation simultaneously, by pursuing an element that he knows performs an action (Figure 38). If a chosen element signifies a group, then a secondary circle 4' begins, displaying the group member elements 3'. This secondary circle may be centred around the group element 3 chosen in the last round, on the parent circle 4 (Figure 39).

According to another preferred embodiment, the chosen element may be near the edge of the user's foveal visual field 5, so if the new circle 4' were centred on the selected element, some of the elements 3' in the circle 4' may lie outside the foveal visual field area 5.

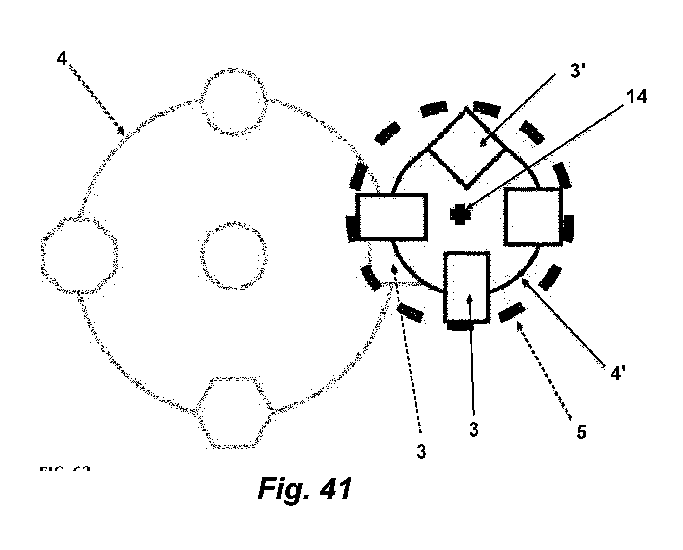

Hence, the user would have to perform a saccade to investigate the graphic elements of the circle that are outside the foveal area (Figure 40). To ensure that all the elements 3' of the secondary circle 4' fit completely within and fill the foveal area 5, the new circle 4' may be centered on the user's current point of gaze 14, rather than the selected element (Figure 41).

The visual appearance of the elements may be designed so that the user can make a complete decision before the graphic choices leave the foveal visual field. The size of elements must be salient and informative enough so that the user can easily select the correct choice to pursue according to its details. To this aim, the elements of each circle may be designed by following a model of human visual saliency by also taking into account the restricted space in the foveal region, which limits the number and size of elements that can be shown in each circle. The minimum size of each element, is 1/100th their viewing distance, even though according to the ETSI standard 201 379 (1998), from a usability point of view, no general recommendation can be given on the minimum acceptable size of an icon.

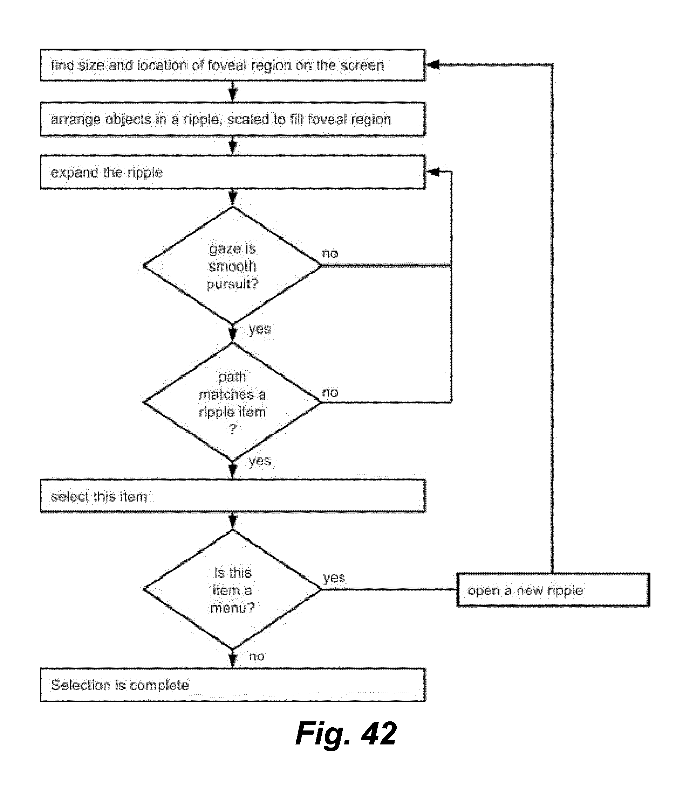

The selection process is summarised in a flowchart, as shown in Figure 42. In this process, first the size of user's foveal region on the GUI device screen is calculated, and then such a region is identified on the screen starting from the gaze tracking. The circle of elements is then placed inside such region and then scaled to completely fill such a region, so that the discrete graphic elements belonging to a circle line are all shown near the edge of the user's foveal visual field.

Then, the circle is operated as a ripple, i.e. expanded, thus moving all the elements thereof outwardly. If the user follows one of the element with a gaze gesture which is identifiable like a smooth pursuit instead of a saccadic gesture, and when this selection is unambiguous, i.e. the smooth path matches with an item of the expanding ripple, the selection is confirmed and, if this element correspond to a menu, i.e. to another set of elements, a new circle made of these elements is opened within a region contained in the use's foveal region on the screen, and possibly expanded like a ripple.

### REFERENCES

Drewes, H., & Schmidt, A. (2007). Interacting with the computer using gaze gestures. In C. Baranauskas, P. Palanque, J. Abascal, & S. D. J. Barbosa (Eds.), Human-Computer Interaction (INTERACT '07) (LNCS 4663, pp. 475-488). Berlin, Germany: Springer. doi:10.1007/978-3-540-74800-7_43
Georgeson, M. A. (1979). Spatial Fourier analysis and human vision. Tutorial essays in psychology, 2, 39-88
Fitts, P. M. (1954). The information capacity of the human motor system in controlling the amplitude of movement. Journal of experimental psychology, 47(6), 381.
Georgeson, M. A. (1979). Spatial Fourier analysis and human vision. Tutorial essays in psychology, 2, 39-88.
Harel, J., Koch, C., & Perona, P. (2007). Graph-based visual saliency. Advances in neural information processing systems, 19, 545
Holmqvist, K., Nyström, M., Andersson, R., Dewhurst, R., Jarodzka, H., & Van de Weijer, J. (2011). Eye tracking: A comprehensive guide to methods and measures. Oxford University Press. ISO 690
Jacob, R. J. K. (1991). The use of eye movements in human-computer interaction techniques: What you look at is what you get. ACM Transactions on Information Systems, 9(3), 152-169. doi:10.1145/123078.128728
Lavie, N. (1995). Perceptual load as a necessary condition for selective attention. Journal of Experimental Psychology: Human Perception and Performance, 21, 451-468.
Manor, B. R., & Gordon, E. (2003). Defining the temporal threshold for ocular fixation in free-viewing visuocognitive tasks. Journal of neuroscience methods,128(1), 85-93
Majaranta, P., Aoki, H., Donegan, M., Hansen, D. W., Hansen, J. P., Hyrskykari, A., & Räihä, K. (2012). Gaze Interaction and Applications of Eye Tracking: Advances in Assistive Technologies (pp. 1-382). Hershey, PA: IGI Global.
Schütz, A. C., Lossin, F., & Gegenfurtner, K. R. (2014). Dynamic integration of information about salience and value for smooth pursuit eye movements. Vision research.
Shneiderman, B. (2003). Why not make interfaces better than 3d reality?. Computer Graphics and Applications, IEEE, 23(6), 12-15.
Slovic, P., Lichtenstein, S., Fischhoff, B. (1988) Decision Making. In Atkinson, R., Herrnstein, R., Lindzey, G., and Luce, R. Steven's Handbook of Experimental Psychology Vol 2. New York, NY:John Wiley and Sons.
Souto, D., & Kerzel, D. (2011). Attentional constraints on target selection for smooth pursuit eye movements. Vision research, 51(1), 13-20.
Tversky, B., Morrison, J. B., & Betrancourt, M. (2002). Animation: can it facilitate?. International journal of human-computer studies, 57(4), 247-262.
Wickens, C., Lee, J., Liu, Y., Becker., S.E.G., (2004) An Introduction to Human Factors Engineering. Upper Saddle River, NJ: Pearson/Prentice Hall.
Wilmut, K., Wann, J. P., & Brown, J. H. (2006). How active gaze informs the hand in sequential pointing movements. Experimental brain research, 175(4), 654-666.
Young, L. R. (1971). Pursuit eye tracking movements. In The control of eye movements (pp. 429-443). Academic Press New York.
Rottach, K. G., Zivotofsky, A. Z., Das, V. E., Averbuch-Heller, L. E. A., Discenna, A. O., Poonyathalang, A., & Leigh, R. J. (1996). Comparison of horizontal, vertical and diagonal smooth pursuit eye movements in normal human subjects. Vision research, 36(14), 2189-2195.
Orban de Xivry, J. J., & Lefevre, P. (2007). Saccades and pursuit: two outcomes of a single sensorimotor process. The Journal of Physiology, 584(1), 11-23.

## Claims

1. Graphic User Interface, for selection by gaze or other input methods, apt to be used on a 2D or 3D screen (2) of a device, providing one or more first discrete graphic elements (1) on the screen, each representing a choice, the selection of one particular first discrete graphic element producing the appearance of a series of second graphic elements (3) each representing a sub-choice related to said choice, said second graphic elements being arranged around a circle line (4) substantially centred on the selected first discrete graphic element (3) which remain visible, the non-selected first graphic elements remaining visible in background, the selection of one of said second graphic elements (3) producing the starting of an action within the device, i.e. possibly the initialization of a software or the like, or, for at least a part of said second graphic elements, the appearance of a further series of third graphic elements (3'), each representing a further sub-choice related to the previous choice and sub-choice, said third graphic elements being arranged around a further circle line (4'), the selected first graphic element (1) and the previous circle line (4) of said second graphic elements (3) remaining possibly visible in background, and so on for possible additional choices represented by additional graphic elements but related to a previous choice.

2. Graphic User Interface according to claim 1, wherein each subsequent circle line corresponding to a previous selected graphic element form a sequence of levels, and wherein:
• the selection of any graphic element in background producing the disappearance or the fading of all the circle lines of the levels subsequent to that of the selected graphic element;
• the selection of the first graphic element originating all the visible circle lines of graphic elements producing the disappearance or the fading of all the circle lines of graphic elements; and
• the selection of another of the first graphic elements producing the disappearance or the fading of all the circle lines of graphic elements and the appearance of another circle line of second graphic elements related to the currently selected first graphic element.

3. Graphic User Interface according to claim 1, wherein the diameter of each discrete graphic element (3) matches at least 1,5° of the central part of the visual field (*element size=radians*radius of the visual field*)*.*

4. Graphic User Interface according to claim 1, wherein the circle lines (4) and/or the graphic elements (3) in background undergo a modification of their shape, colour, position, size on said screen, or a combination thereof.

5. Graphic User Interface according to claim 4, wherein the graphic elements (3) are moved at a speed not higher than 40°/s to change the position thereof.

6. Graphic User Interface according to claim 4, wherein each subsequent circle line (4) corresponding to a previous selected graphic element (3) forms a sequence of levels, the circle line and the graphic elements of each level in background assuming a peculiar modification of their shape, colour, position, size on said screen, or a combination thereof representing their level.

7. Graphic User Interface according to claim 6, wherein the circle line (4) and the graphic elements (3) of each level in background are de-emphasised by using visual properties that make real-world distant elements less discernable, such as perspective, focus, haze and lighting.

8. Graphic User Interface according to any of preceding claims, comprising a gaze tracking device, to detect the gaze path of a GUI user on the screen (2), including at least a camera, a microprocessor to elaborate gaze data and a related software implemented within the microprocessor.

9. Graphic User Interface according to claim 8 wherein the discrete graphic elements under the user's gaze starts an animation, and a minimum delay of 300 ms for each element before the animation starts is set, thus assuring that the user understands the semantic or categorial meaning of the related choice.

10. Graphic User Interface according to claim 8, wherein the circle line (4) of discrete graphic elements (3) is made to uniformly expand as the user continues to gaze at a choice within the circle line (4), such that every discrete graphic element (3) performs a unique trajectory path to induce the user's eyes to perform an unambiguous gaze gesture that selects a discrete graphic element (3).

11. Graphic User Interface according to claim 8, further comprising:
• means for detecting the distance between the GUI screen and the user's eyes; and
• means for determining the user's visual foveal field by measuring the user's eye distance from the screen (2), so as to calculate the size of the user's foveal visual field on the screen (2).

12. Graphic User Interface according to claims 10 and 11,
wherein the discrete graphic elements (3) of a circle line (4) are all scaled to be initially displayed within a region (5) on the screen which is calculated to fall within the foveal visual field of the user; and
wherein the discrete graphic elements (3) are moved with the movement speed is greater than 0.5°/s and lower than 30°/s,
so that the discrete graphic elements (3) in the circle line (4) are no longer all visible within the user's foveal visual field so as, if the user wishes to continue to attend to one or more elements, the user is forced to make a choice (7) about which element to track.

13. Graphic User Interface according to claim 11, wherein the discrete graphic element movement duration is not lower than 40 ms, and a selection freezes the motion of discrete graphic elements (3) in the circle line (4) once a selection has been made, thus determining a new subsequent circle (4'), and the discrete elements thereof pause for at least 100 ms.

14. Graphic User Interface according to claim 11, wherein, when the discrete graphic elements (3) of a circle line (4) are scaled to be initially displayed within a region which is calculated to fit within a foveal visual field of the user on the screen (2), they are scaled so as to completely fill the foveal visual field of the user on the screen (2) and they are all shown on the screen (2) near the edge of the user's foveal visual field (5).
